(19) **Europäisches Patentamt / European Patent Office / Office européen des brevets**

(11) **EP 4 738 388 A1**

(12) **EUROPEAN PATENT APPLICATION**
published in accordance with Art. 153(4) EPC

(43) Date of publication:
06.05.2026 Bulletin 2026/19

(21) Application number: 23943722.1

(22) Date of filing: 30.06.2023

(51) International Patent Classification (IPC):
$H01B\ 3/44^{(2006.01)}$  $H01B\ 9/00^{(2006.01)}$

(52) Cooperative Patent Classification (CPC):
H01B 3/44; H01B 9/00

(86) International application number:
PCT/JP2023/024391

(87) International publication number:
WO 2025/004334 (02.01.2025 Gazette 2025/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: Sumitomo Electric Industries, Ltd.
Osaka-shi, Osaka 541-0041 (JP)

(72) Inventors:
• SAKAIDA, Hideaki
  Osaka-shi, Osaka 541-0041 (JP)
• YAMASAKI, Satoshi
  Osaka-shi, Osaka 541-0041 (JP)
• YAMAZAKI, Takanori
  Osaka-shi, Osaka 541-0041 (JP)
• ONODA, Takaaki
  Osaka-shi, Osaka 541-0041 (JP)

(74) Representative: Grünecker Patent- und Rechtsanwälte
PartG mbB
Leopoldstraße 4
80802 München (DE)

(54) **RESIN COMPOSITION, POWER CABLE, AND METHOD FOR PRODUCING POWER CABLE**

(57) This resin composition is provided to cover a conductor of a power cable, and constitutes an insulating layer having an inner peripheral surface facing the conductor and an outer peripheral surface opposite to the inner peripheral surface. The resin composition includes: a base polymer that contains propylene units; a modified polymer that contains the propylene units and that is modified by at least one selected from an unsaturated organic acid and a derivative thereof; and a thermoplastic elastomer. The resin composition is configured such that the ratio of the storage elastic modulus of an inner sample of the insulating layer to the storage elastic modulus of an outer sample of the insulating layer is 1.1 or more and 2.5 or less, and the ratio of the volume resistivity of the inner sample to the volume resistivity of the outer sample is 1.0 or more and 1.5 or less. Here, the outer sample of the insulating layer is collected from a position of 0.3 mm from the outer peripheral surface toward the conductor, the inner sample of the insulating layer is collected from a position of 0.3 mm from the inner peripheral surface toward the outer peripheral surface, and the storage elastic modulus of the outer sample and the storage elastic modulus of the inner sample are measured at 25°C by dynamic viscoelasticity measurement.

FIG. 1

10

EP 4 738 388 A1

# EP 4 738 388 A1

## Description

TECHNICAL FIELD

The present disclosure relates to a resin composition, a power cable, and a method of manufacturing a power cable.

BACKGROUND ART

Cross-linked polyethylene has been widely used as a resin component constituting an insulating layer of a power cable because of its excellent insulating property (for example, Patent literature 1).

CITATION LIST

PATENT LITERATURE

Patent literature 1: Japanese Unexamined Patent Application Publication No. S57-69611

SUMMARY OF INVENTION

According to one aspect of the present disclosure, a resin composition constituting an insulating layer that is disposed to cover a conductor of a power cable and has an inner peripheral surface facing the conductor and an outer peripheral surface opposite to the inner peripheral surface is provided. The resin composition contains a base polymer including propylene units, a modified polymer including propylene units and modified with at least one selected from unsaturated organic acids and derivatives thereof, and a thermoplastic elastomer. The resin composition is configured such that a ratio of a storage modulus of an inner-side sample of the insulating layer to a storage modulus of an outer-side sample of the insulating layer is 1.1 or more and 2.5 or less, and a ratio of a volume resistivity of the inner-side sample to a volume resistivity of the outer-side sample is 1.0 or more and 1.5 or less, where the outer-side sample of the insulating layer is collected from a position 0.3 mm away from the outer peripheral surface toward the conductor, the inner-side sample of the insulating layer is collected from a position 0.3 mm away from the inner peripheral surface toward the outer peripheral surface, the storage modulus of the outer-side sample and the storage modulus of the inner-side sample is measured by dynamic mechanical analysis at 25°C, and the volume resistivity of the outer-side sample and the volume resistivity of the inner-side sample is measured at a temperature of 90°C and a DC electric field of 80 kV/mm.

BRIEF DESCRIPTION OF THE DRAWINGS

[FIG. 1] FIG. 1 is a schematic cross-sectional view orthogonal to an axial direction of a power cable according to an embodiment of the present disclosure.
[FIG. 2] FIG. 2 is a diagram showing a temperature at a position where an outer-side sample is collected and a temperature at a position where an inner-side sample is collected in a cooling step of a sample A3.
[FIG. 3] FIG. 3 is a diagram showing a temperature at a position where an outer-side sample is collected and a temperature at a position where an inner-side sample is collected in a cooling step of a sample B1.

DETAILED DESCRIPTION

[Problems to be Solved by Present Disclosure]

The present inventors focused on polypropylene as a resin component forming an insulating layer, and have conducted intensive research to improve characteristics of a power cable.
An object of the present disclosure is to improve the flexibility, strength and insulating property of the insulating layer.

[Advantageous Effects of Present Disclosure]

According to the present disclosure, the flexibility, strength and insulating property of the insulating layer can be improved.

[Description of Embodiments of Present Disclosure]

<Knowledge Obtained by the Inventors>

First, the outline of knowledge obtained by the inventors will be described.

In the manufacturing process of the power cable, the insulating layer is formed by extrusion molding to cover the outer periphery of the conductor with the resin composition melted in a heated extruder. After the insulating layer is formed by extrusion molding, the insulating layer is cooled by a predetermined cooling method.

In this case, the outer peripheral surface of the insulating layer is cooled using a predetermined refrigerant. As a result, cooling proceeds from the outer periphery of the insulating layer toward the inner periphery of the insulating layer in a radial direction of the conductor.

When a temperature used to cool the outer peripheral surface of the insulating layer is low, that is, a cooling rate of the outer peripheral surface of the insulating layer is high, a base polymer on an outer side of the insulating layer is rapidly cooled. The base polymer on an inner side of the insulating layer is less likely to be cooled than the base polymer on the outer side of the insulating layer, and is slowly cooled.

Thus, when the cooling rate of the outer peripheral surface of the insulating layer is high, a distribution (variation) of the degree of crystallinity occurs in a thickness direction of the insulating layer. That is, the degree of the crystallinity of the base polymer is lowered on the outer side of the insulating layer. The degree of the crystallinity of the base polymer on the inner side of the insulating layer becomes higher than that on the outer side of the insulating layer. When such a distribution of the degree of crystallinity occurs, the insulating property gradually decreases from the inner side toward the outer side of the insulating layer. As a result, it becomes difficult to achieve a sufficient insulating property intended for the insulating layer of the power cable as a whole.

Thus, conventionally, the cooling rate is made uniform in the thickness direction of the insulating layer by decreasing the cooling rate of the outer peripheral surface of the insulating layer. That is, the cooling rate of the base polymer on the outer side of the insulating layer and the cooling rate of the base polymer on the inner side of the insulating layer are made close to each other. As a result, the degree of the crystallinity of the base polymer on the outer side of the insulating layer and the degree of the crystallinity of the base polymer on the inner side of the insulating layer are controlled to be both similarly high. As a result, the insulating layer of the power cable has achieved the intended sufficient insulating property as a whole.

However, when the cooling rate of the outer peripheral surface of the insulating layer is decreased, the degree of the crystallinity of the insulating layer is high and uniform in the thickness direction of the insulating layer, and thus the elasticity of the insulating layer is also uniform in the thickness direction of the insulating layer.

Thus, for example, the elasticity of the base polymer on the inner side of the insulating layer and the elasticity of the base polymer on the outer side of the insulating layer may become high. In this case, it is difficult to sufficiently achieve the flexibility of the power cable when the power cable is bent. As a result, there is a restriction on a reel diameter when the power cable is wound around the reel.

In the conventional method, since the above-described problems occur, it has been desired to achieve both a desired elasticity of the insulating layer and a uniform insulating property of the insulating layer in the thickness direction.

Thus, as a result of intensive studies, the present inventors have succeeded in achieving the uniform insulating property of the insulating layer in the thickness direction of the insulating layer while obtaining a desired distribution of elasticity in the thickness direction of the insulating layer by improving the resin component and applying a novel manufacturing method.

The present disclosure is based on the above-described knowledge found by the present inventors.

<Embodiments of the Present Disclosure>

Next, embodiments of the present disclosure will be listed and described.

[1] A resin composition according to one aspect of the present disclosure is a resin composition constituting an insulating layer that is disposed to cover a conductor of a power cable and has an inner peripheral surface facing the conductor and an outer peripheral surface opposite to the inner peripheral surface. The resin composition contains a base polymer including propylene units, a modified polymer including propylene units and modified with at least one selected from unsaturated organic acids and derivatives thereof, and a thermoplastic elastomer. The resin composition is configured such that a ratio of a storage modulus of an inner-side sample of the insulating layer to a storage modulus of an outer-side sample of the insulating layer is 1.1 or more and 2.5 or less, and a ratio of a volume resistivity of the inner-side sample to a volume resistivity of the outer-side sample is 1.0 or more and 1.5 or less, where the outer-side sample of the insulating layer is collected from a position 0.3 mm away from the outer peripheral surface toward the conductor, the inner-side sample of the insulating layer is collected from a position 0.3 mm away from the inner peripheral surface toward the outer peripheral surface, the storage modulus of the outer-side sample and the storage modulus of the inner-side sample is measured by dynamic mechanical analysis at 25°C, and the volume resistivity of the outer-side sample and the volume resistivity of the inner-side sample is measured at a temperature of 90°C and a DC electric field of 80 kV/mm. According to this configuration, the flexibility, strength, and insulating property of the insulating layer can be improved.

[2] A power cable according to one aspect of the present disclosure includes a conductor, and an insulating layer disposed to cover an outer periphery of the conductor and having an inner peripheral surface facing the conductor and an outer peripheral surface opposite to the inner peripheral surface. The insulating layer contains a base polymer including propylene units, a modified polymer including propylene units and modified with at least one selected from unsaturated organic acids and derivatives thereof, and a thermoplastic elastomer. A ratio of a storage modulus of an inner-side sample of the insulating layer to a storage modulus of an outer-side sample of the insulating layer is 1.1 or more and 2.5 or less, and a ratio of a volume resistivity of the inner-side sample to a volume resistivity of the outer-side sample is 1.0 or more and 1.5 or less, where the outer-side sample of the insulating layer is collected from a position 0.3 mm away from the outer peripheral surface toward the conductor, the inner-side sample of the insulating layer is collected from a position 0.3 mm away from the inner peripheral surface toward the outer peripheral surface, the storage modulus of the outer-side sample and the storage modulus of the inner-side sample is measured by dynamic mechanical analysis at 25°C, and the volume resistivity of the outer-side sample and the volume resistivity of the inner-side sample is measured at a temperature of 90°C and a DC electric field of 80 kV/mm. According to this configuration, the flexibility, strength, and insulating property of the insulating layer can be improved.

[3] In the power cable described in the above [2], when a total content of the base polymer, the modified polymer, and the thermoplastic elastomer in the insulating layer is 100 parts by mass, a content of the modified polymer in the insulating layer may be 1 part by mass or more and 10 parts by mass or less, and a content of the thermoplastic elastomer in the insulating layer may be 10 parts by mass or more and 45 parts by mass or less. According to this configuration, in the thickness direction of the insulating layer, both a desired distribution of elasticity and uniformity of the insulating property can be stably achieved.

[4] In the power cable described in the above [2] or [3], the thermoplastic elastomer may include a styrene-based elastomer. According to this configuration, short chain branches can be easily incorporated in the molecular structure of the thermoplastic elastomer (C) having flexibility. As a result, the compatibility between the base polymer (A) and the thermoplastic elastomer (C) can be improved.

[5] In the power cable described in any one of the above [2] to [4], the thermoplastic elastomer may include an olefin-based elastomer. According to this configuration, short chain branches can be easily incorporated in the molecular structure of the thermoplastic elastomer (C) having flexibility. As a result, the compatibility between the base polymer (A) and the thermoplastic elastomer (C) can be improved.

[6] In the power cable described in any one of the above [2] to [5], the storage modulus of the inner-side sample of the insulating layer may be 650 MPa or more and 900 MPa or less, and the storage modulus of the outer-side sample of the insulating layer may be 280 MPa or more and 670 MPa or less. According to this configuration, both rigidity and flexibility of a power cable 10 can be achieved.

[7] In the power cable described in any one of the above [2] to [6], the insulating layer may have a thickness of 3 mm or more. According to this configuration, even when the power cable is applied to a high-voltage application, it is possible to stably achieve both the flexibility of the insulating layer and the insulating property of the insulating layer.

[8] A method of manufacturing a power cable according to another aspect of the present disclosure includes preparing a resin composition and forming an insulating layer with the resin composition to cover an outer periphery of a conductor, to form, in the insulating layer, an inner peripheral surface facing the conductor and an outer peripheral surface opposite to the inner peripheral surface. In the preparing a resin composition, a composition that contains a base polymer including propylene units, a modified polymer including propylene units and modified with at least one selected from unsaturated organic acids and derivatives thereof, and a thermoplastic elastomer is prepared as the resin composition. The forming an insulating layer includes forming the insulating layer on the outer periphery of the conductor by extrusion molding, and cooling the insulating layer so that a ratio of a storage modulus of an inner-side sample of the insulating layer to a storage modulus of an outer-side sample of the insulating layer is 1.1 or more and 2.5 or less, and a ratio of a volume resistivity of the inner-side sample to a volume resistivity of the outer-side sample is 1.0 or more and 1.5 or less, where the outer-side sample of the insulating layer is collected from a position 0.3 mm away from the outer peripheral surface toward the conductor, the inner-side sample of the insulating layer is collected from a position 0.3 mm away from the inner peripheral surface toward the outer peripheral surface, the storage modulus of the outer-side sample and the storage modulus of the inner-side sample is measured by dynamic mechanical analysis at 25°C, and the volume resistivity of the outer-side sample and the volume resistivity of the inner-side sample is measured at a temperature of 90°C and a DC electric field of 80 kV/mm. According to this configuration, the flexibility, strength, and insulating property of the insulating layer can be improved.

[9] In the method of manufacturing a power cable described in the above [8], in the cooling the insulating layer, for at least a part of a period immediately after the forming the insulating layer by extrusion molding, the insulating layer may be cooled from a region of the insulating layer near the outer peripheral surface while the conductor is subjected to electromagnetic induction heating. According to this configuration, the inner side of the insulating layer can be slowly cooled.

[Details of Embodiments of Present Disclosure]

An embodiment of the present disclosure will be described with reference to the drawings. The present disclosure is not limited to these examples, but is defined by the scope of the claims, and is intended to include all modifications within the meaning and scope equivalent to the scope of the claims.

<An Embodiment of the Present Disclosure>

(1) Resin composition

The resin composition of the present embodiment is a material constituting an insulating layer 130 of the power cable 10 to be described later. The resin composition includes, for example, a base polymer (A), a modified polymer (B), a thermoplastic elastomer (C), and other additives.

Hereinafter, the base polymer (A), the modified polymer (B), and the thermoplastic elastomer (C) are also referred to as "resin components."

(Base polymer (A))

The base polymer (base resin) (A) refers to a resin component constituting a main component of the resin composition. The "main component" means a component having the highest content.

The base polymer (A) of the present embodiment contains, for example, at least propylene units as monomer units.

That is, by analyzing the resin composition of the present embodiment using a nuclear magnetic resonance (NMR) apparatus, propylene units are detected as monomer units derived from the base polymer (A).

The base polymer (A) is formed of, for example, polypropylene (also referred to as a propylene resin, PP) having propylene units in the main chain. Examples of the polypropylene include homopolypropylene (homo PP), random polypropylene (random PP), and block polypropylene (block PP).

When the base polymer (A) is a random PP or a block PP, for example, propylene units and ethylene units derived from the random PP or the block PP are detected by the analysis of the resin composition of the present embodiment using the NMR. When the base polymer (A) is a homo PP, propylene units derived from the homo PP are detected.

From the viewpoint of obtaining high insulating property in the insulating layer 130, the base polymer (A) may be a random PP. The homo PP has a larger amount of crystals than the random PP, and thus a higher insulating property can be obtained. However, in the insulating layer 130 containing the homo PP, there is a possibility that cracks or the like may occur within the crystals or between the crystals. Thus, with the homo PP, no inherent insulating property may be obtained. In contrast, the random PP contains ethylene units, and thus has a smaller amount of crystals. However, in the insulating layer 130 containing the random PP, cracking due to coarse crystallization is less likely to occur. As a result, the random PP can obtain a higher insulating property than the homo PP.

When the base polymer (A) is a random PP, the content of ethylene units in the random PP may be, for example, 0.5% by mass or more and 15% by mass or less. By setting the content of ethylene units to 0.5% by mass or more, the growth of coarse spherulites can be suppressed. When the content of ethylene units is 15% by mass or less, a decrease in melting point is suppressed, and use in a non-crosslinked or slightly crosslinked state can be stably realized.

In the present embodiment, the tacticity of polypropylene is not particularly limited, but may be, for example, isotactic. Here, when the tacticity of polypropylene is atactic, polypropylene is not crystallized. In contrast, isotactic polypropylene is polymerized with a Ziegler-Natta catalyst and is versatile. Since the tacticity is isotactic, the decrease in the melting point can be suppressed in the composition. This makes it possible to easily obtain a predetermined crystallinity and obtain a high insulating property.

In the present embodiment, a storage modulus of the base polymer (A) itself is, for example, 800 MPa or more and 1700 MPa or less. The method and conditions for measuring the "storage modulus of the base polymer (A) itself" as used herein are the same as those for measuring the storage modulus of the insulating layer described later.

A melt flow rate (MFR) of the base polymer (A) is not particularly limited, but the MFR of the base polymer (A) may be, for example, 0.1 g/10 min or more and 5.0 g/10 min or less, or 0.1 g/10 min or more and 2.0 g/10 min or less. The term "MFR" as used herein means a value measured at a temperature of 190°C and a load of 2.16 kg in accordance with JIS K7210. By setting the MFR of the base polymer (A) within the above range, a phase structure described later can be easily formed in the insulating layer 130.

The melting point of the base polymer (A) is not particularly limited, but the melting point of the base polymer (A) may be, for example, 130°C or more and 165°C or less. This makes it possible to easily form a phase structure described later when the base polymer (A) is mixed with at least one of the modified polymer (B) or the thermoplastic elastomer (C).

(Modified polymer (B))

The modified polymer (B) is a resin containing propylene units as a main chain and modified with at least one selected from unsaturated organic acids and derivatives thereof.

When the modified polymer (B) contains propylene units, the compatibility between the base polymer (A) and the modified polymer (B) when mixed can be improved.

The modified polymer (B) is modified with an unsaturated organic acid containing polar groups, and thus the polar groups can be incorporated into the resin composition. This allows the polar groups dispersed in the insulating layer 130 formed by the resin composition to trap space charge. That is, local accumulation of the space charge in the insulating layer 130 can be suppressed. As a result, the insulating property of the insulating layer 130 can be improved.

Specifically, the modified polymer (B) may be, for example, unsaturated carboxylic acid-modified polypropylene in which polypropylene is modified with at least one of unsaturated carboxylic acids or derivatives thereof. Examples of the unsaturated carboxylic acid and the derivatives include acrylic acid, methacrylic acid, crotonic acid, maleic acid, cinnamic acid, itaconic acid, citraconic acid, fumaric acid, and anhydrides thereof.

Among these, the modified polymer (B) may be modified with maleic anhydride, for example. Maleic anhydride has a large number of polar groups per molecular weight. This makes it possible to obtain a sufficient number of polar groups in the modified polymer (B) even when the content of maleic anhydride in the modified polymer (B) is small.

The modification amount of at least one of the unsaturated carboxylic acids or the derivatives (hereinafter, also simply referred to as a modification amount) in the modified polymer (B) is not particularly limited, but the modification amount may be, for example, 0.1% by mass or more and 10% by mass or less. The term "modification amount" as used herein means a copolymerization ratio (content ratio) of at least one of the unsaturated carboxylic acids or the derivatives in the modified polymer (B). By setting the modification amount to 0.1% by mass or more, the accumulation of space charge in the insulating layer 130 can be stably suppressed. By setting the modification amount to 10% by mass or less, the compatibility between the modified polymer (B) and the base polymer (A) can be improved.

In the present embodiment, the storage modulus of the modified polymer (B) itself is, for example, 1000 MPa or more and 1900 MPa or less. The method and conditions for measuring the "storage modulus of the modified polymer (B) itself" as used herein are the same as those for measuring the storage modulus of the insulating layer described later.

An MFR of the modified polymer (B) is not particularly limited, but the MFR of the modified polymer (B) may be, for example, 0.1 g/10 min or more and 500 g/10 min or less, or 1 g/10 min or more and 300 g/10 min or less. The measurement conditions for the MFR of the modified polymer (B) are the same as the measurement conditions described for the MFR of the base polymer (A). By setting the MFR of the modified polymer (B) within the above range, the phase structure described later can be easily formed when the base polymer (A) and the modified polymer (B) are mixed.

A melting point of the modified polymer (B) is not particularly limited, but the melting point of the modified polymer (B) may be, for example, 130°C or more and 165°C or less. This makes it possible to easily form the phase structure described later when the base polymer (A) and the modified polymer (B) are mixed.

(Thermoplastic elastomer (C))

The thermoplastic elastomer (C) has a lower crystallinity than the base polymer (A) having propylene units. The thermoplastic elastomer (C) can suppress excessive crystal growth of the base polymer (A), thereby imparting flexibility to the insulating layer 130.

Examples of the thermoplastic elastomer (C) include amide-based, ester-based, olefin-based, styrene-based, urethane-based, vinyl chloride-based, and fluorine-based elastomers. Among these, the thermoplastic elastomer (C) may be at least one of a styrene-based polymer or an olefin-based elastomer.

(Styrene-based elastomer)

The thermoplastic elastomer (C) may include, for example, a styrene-based elastomer. This makes it possible to easily incorporate short chain branches in the molecular structure of the thermoplastic elastomer (C) having flexibility. As a result, the compatibility between the base polymer (A) and the thermoplastic elastomer (C) can be improved.

In the present embodiment, the styrene-based elastomer is, for example, a copolymer including styrene units as a hard segment and at least one type of monomer units of ethylene units, propylene units, butylene units, isoprene units, or the like as a soft segment.

Examples of the styrene-based elastomer include a styrene-butadiene-styrene block copolymer (SBS), a hydrogenated styrene-butadiene-styrene block copolymer, a styrene-ethylene-styrene block copolymer (SES), a styrene-ethylene-propylene copolymer (SEP), a styrene-ethylene-ethylene-propylene-styrene block copolymer (SEEPS), a styrene-ethylene-propylene-styrene block copolymer (SEPS), a styrene-isoprene-styrene copolymer (SIS), a hydrogenated styrene-isoprene-styrene copolymer, a hydrogenated styrene-butadiene rubber, a hydrogenated styrene-isoprene rubber, and a styrene-ethylenebutylene-olefin crystal block copolymer. Two or more of these may be used in combination.

The term "hydrogenated" as used herein means that hydrogen has been added to a double bond. For example, "hydrogenated styrene-butadiene-styrene block copolymer" means a polymer in which hydrogen has been added to a double bond in the styrene-butadiene-styrene block copolymer. No hydrogen is added to a double bond in the aromatic ring included in styrene. The "hydrogenated styrene-butadiene-styrene block copolymer" can also be referred to as a styrene-ethylene butylene-styrene block copolymer (SEBS).

The styrene-based elastomer may be, for example, a hydrogenated material having no double bond in its chemical structure excluding an aromatic ring. When a non-hydrogenated material is used, the resin component may be thermally deteriorated during molding of the resin composition or the like. Thus, properties of the resulting insulating layer 130 may be deteriorated. In contrast, using the hydrogenated material can improve resistance to thermal degradation. Thus, the properties of the insulating layer 130 can be maintained at a higher level.

Furthermore, the styrene-based elastomer may include, for example, styrene units, and at least one type of propylene units or butene units. This makes it possible to stably improve the compatibility between the polypropylene as the base polymer (A) and the styrene-based elastomer. As a result, polypropylene and the styrene-based elastomer can be uniformly mixed.

A content (content ratio, hereinafter, also simply referred to as a "styrene unit content") of styrene units in the styrene-based elastomer is not particularly limited, but the styrene unit content may be, for example, 5% by mass or more and 35% by mass or less. By setting the styrene unit content to 5% by mass or more and 35% by mass or less, it is possible to stably suppress excessive hardening of the material. This enables separation and cracking between polypropylene and the thermoplastic elastomer (C) to be stably suppressed.

(Olefin-based elastomer)

The thermoplastic elastomer (C) may include, for example, an olefin-based elastomer. This makes it possible to easily incorporate short chain branches in the molecular structure of the thermoplastic elastomer (C) having flexibility. As a result, the compatibility between the base polymer (A) and the thermoplastic elastomer (C) can be improved.

The olefin-based elastomer as the thermoplastic elastomer (C) is, for example, a copolymer of two types of olefin units. Examples of the olefin-based elastomer include a copolymer of ethylene units and an $\alpha$-olefin units having three or more carbon atoms, and a copolymer of propylene units and $\alpha$-olefin units having four or more carbon atoms.

Specific examples of the olefin-based elastomer include ethylene-propylene rubber (EPR), very low density poly ethylene (VLDPE), and a propylene/1-butene copolymer (propylene/1-butene rubber (PBR)). An ethylene/1-butene copolymer (ethylene/1-butene rubber (EBR)) is a type of the VLDPE.

The olefin-based elastomer may include, for example, at least one type of propylene units or butene units. This makes it possible to stably improve the compatibility between polypropylene as the base polymer (A) and the olefin-based elastomer. As a result, polypropylene and olefin-based elastomer can be uniformly mixed.

When the olefin-based elastomer includes ethylene units, the content of the ethylene units in the olefin-based elastomer is not particularly limited, but the content of the ethylene units may be, for example, 5% by mass or more and 90% by mass or less. Thus, the flexibilizing effect and the crystallization inhibition effect achieved by the olefin-based elastomer can be stably obtained.

(Properties of Thermoplastic Elastomer)

In the present embodiment, the storage modulus of the thermoplastic elastomer (C) itself is, for example, 20 MPa or more and 500 MPa or less. The method and conditions for measuring the "storage modulus of the thermoplastic elastomer (C) itself " as used herein are the same as those for measuring the storage modulus of the insulating layer described later.

The MFR of the thermoplastic elastomer (C) is not particularly limited, but the MFR of the thermoplastic elastomer (C) may be, for example, 0.1 g/10 min or more and 5.0 g/10 min or less, or 0.1 g/10min or more and 2.0 g/10 min or less. The measurement conditions of the MFR of the thermoplastic elastomer (C) are the same as the measurement conditions described for the MFR of the base polymer (A). When the MFR of the thermoplastic elastomer (C) is within the above range, the phase structure described later can be easily formed when the base polymer (A) and the thermoplastic elastomer (C) are mixed.

The thermoplastic elastomer (C) may have, for example, no melting point or a melting point of less than 165°C. This makes it possible to easily form the phase structure described later when the base polymer (A) and the thermoplastic elastomer (C) are mixed.

(Contents of Modified Polymer (B) and Thermoplastic Elastomer (C))

The contents of the modified polymer (B) and the thermoplastic elastomer (C) will be described. Here, a total content of the resin components composed of the base polymer (A), the modified polymer (B), and the thermoplastic elastomer (C) is 100 parts by mass. The remaining component of the resin components, excluding the modified polymer (B) and the thermoplastic elastomer (C), is the base polymer (A).

In the present embodiment, the content of the modified polymer (B) in the resin composition (i.e., the insulating layer 130) may be, for example, 1 part by mass or more and 10 parts by mass or less. By setting the content of the modified polymer (B) to 1 part by mass or more, it is possible to suppress a decrease in the insulating property of the insulating layer 130. By setting the content of the modified polymer (B) to 10 parts by mass or less, it is possible to suppress a decrease in the moldability of the insulating layer 130. This can suppress the deterioration of the insulating property of the insulating layer 130 due to the decreased moldability.

The content of the thermoplastic elastomer (C) in the resin composition (i.e., the insulating layer 130) may be, for example, 10 parts by mass or more and 45 parts by mass or less. By setting the content of the thermoplastic elastomer (C) to 10 parts by mass or more, it is possible to suppress an excessive increase in the elasticity of the insulating layer 130, and to impart flexibility to the insulating layer 130. By setting the content of the thermoplastic elastomer (C) to 45 parts by mass or less, that is, by suppressing excessive incorporation of the amorphous thermoplastic elastomer (C), it is possible to suppress a decrease in the insulating property and mechanical properties that are inherently intended for polypropylene, which has a high melting point as the base polymer (A).

Furthermore, by setting the content of each of the modified polymer (B) and the thermoplastic elastomer (C) within the above-described range, the phase structure described later can be easily formed.

As described above, by setting the content of each of the modified polymer (B) and the thermoplastic elastomer (C) within the above-described range, it is possible to stably achieve both the desired distribution of elasticity and the uniformity of the insulating property in the thickness direction of the insulating layer 130.

(Inorganic Filler)

In the present embodiment, the resin composition contains the modified polymer (B), enabling uniform trapping effect of space charge in the resin composition as described above. This makes it possible to stably obtain a high insulating property without adding an inorganic filler. Thus, in the present embodiment, the resin composition may contain no inorganic filler.

The resin composition may contain a trace amount of an inorganic filler to the extent that clogging of a mesh in an extruder does not occur.

Specifically, the resin composition may contain an inorganic filler, and the content of the inorganic filler may be, for example, less than 1 part by mass when the total content of the resin components is 100 parts by mass. The lower limit of the content of the inorganic filler is not limited as long as the inorganic filler can be added.

Examples of the inorganic filler include magnesium oxide (MgO), silicon dioxide, zinc oxide, aluminum oxide, titanium oxide, zirconium oxide, carbon black, and mixtures of two or more thereof.

A mean volume diameter (MV) of the inorganic filler is not particularly limited, but is, for example, 1 $\mu$m or less, or may be 700 nm or less, or may be 100 nm or less. The term "mean volume diameter (MV)" as used herein is determined by the following equation:

$$MV = \Sigma\,(V_i\,d_i)/\Sigma\,V_i$$

where $d_i$ is a diameter of a particle, and $V_i$ is a volume of the particle.

For a measurement of the mean volume diameter, a dynamic light scattering-type particle diameter/particle size distribution measuring device may be used.

The lower limit of the mean volume diameter of the inorganic filler is also not particularly limited. However, from the viewpoint of stably forming the inorganic filler, the mean volume diameter of the inorganic filler is, for example, 1 nm or more, or may be 5 nm or more.

At least a part of the inorganic filler may be surface-treated with a silane coupling agent. The adhesion at the interface between the inorganic filler and the base polymer (A) can be improved, and mechanical properties and insulating property of the insulating layer 130 can be improved.

(Cross-linking Agent)

In the present embodiment, the resin component forming the insulating layer 130 may be non-crosslinked from the viewpoint of recycling. In this case, the resin composition may be free of a cross-linking agent.

The resin composition may contain a trace amount of a crosslinking agent such that a gel fraction (degree of crosslinking) is reduced. Specifically, the resin composition may contain a crosslinking agent such that the residue of the crosslinking agent in the insulating layer 130 is less than 300 ppm, for example. When dicumylperoxide is used as the crosslinking agent, the residue is, for example, cumyl alcohol, $\alpha$-methylstyrene, or the like.

(Other Additives)

The resin composition may contain other additives as necessary. Other additives include an antioxidant, a lubricant, and a colorant.

(2) Power Cable

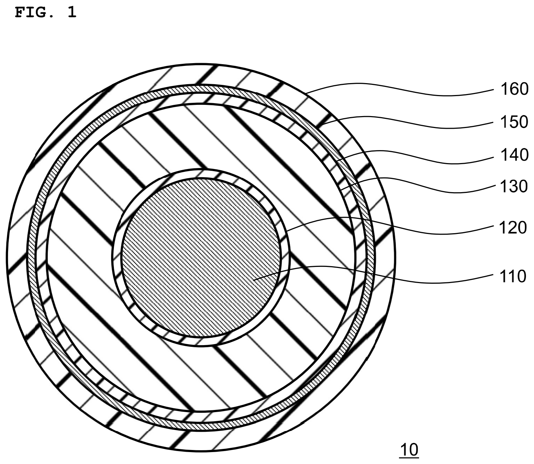

Next, a power cable of the present embodiment will be described with reference to FIG. 1.

A power cable 10 of the present embodiment is configured as a so-called solid insulation power cable. The power cable 10 of the present embodiment is configured to be laid on the ground (in a pipeline), under water, or on the bottom of water, for example. The power cable 10 may be used for, for example, direct current.

Specifically, the power cable 10 includes, for example, a conductor 110, an inner semiconductive layer 120, the insulating layer 130, an outer semiconductive layer 140, a shielding layer 150, and a sheath 160.

(Conductor (Conductive Part))

The conductor 110 is formed by twisting a plurality of conductor core wires (conductive core wires) including, for example, pure copper, a copper alloy, aluminum, an aluminum alloy, or the like.

(Inner Semiconductive Layer)

The inner semiconductive layer 120 is provided to cover the outer periphery of the conductor 110. The inner semiconductive layer 120 is configured to be semiconductive and to suppress electric field concentration at a surface of the conductor 110. The inner semiconductive layer 120 includes, for example, at least one of an olefin-based elastomer, the above-described low-crystalline resins, and an ethylene-based copolymer such as an ethylene-ethyl acrylate copolymer, an ethylene-methyl acrylate copolymer, an ethylene-butyl acrylate copolymer, or an ethylene-vinyl acetate copolymer, together with conductive carbon black.

(Insulating Layer)

The insulating layer 130 is provided to cover the outer periphery of the inner semiconductive layer 120. The insulating layer 130 is formed by extrusion molding of a resin composition, for example, as described above. The insulating layer 130 has an inner peripheral surface facing the conductor 110 and an outer peripheral surface opposite to the inner peripheral surface.

In the present embodiment, the elasticity of the insulating layer 130 varies in the thickness direction of the insulating layer 130. The insulating property of the insulating layer 130 is uniform in the thickness direction of the insulating layer 130. Details regarding this point will be described later.

In the present embodiment, the insulating layer 130 has a predetermined phase structure through the mixing of the base polymer (A), the modified polymer (B), and the thermoplastic elastomer (C).

Specifically, since the insulating layer 130 contains the modified polymer (B), a structure in which the base polymer (A) and the modified polymer (B) are compatible with each other, or a sea-island structure in which the modified polymer (B) is finely dispersed in the base polymer (A) is formed. The term "compatible structure" as used herein means that, for example, when the phase structure is observed using a transmission electron microscope, no phase separation can be confirmed, and the respective components are uniformly dispersed.

As the modified polymer (B) is more finely dispersed in the insulating layer 130, the accumulation of space charge can be suppressed. From this viewpoint, the structure in which the resin components are compatible with each other may be formed in the insulating layer 130. Alternatively, when the sea-island structure is formed in the insulating layer 130, a diameter of an island phase formed of the modified polymer (B) may be less than 0.5 $\mu$m.

Furthermore, since the insulating layer 130 contains not only the base polymer (A) and the modified polymer (B) but also the thermoplastic elastomer (C), a sea-island structure in which the thermoplastic elastomer (C) is finely dispersed in the above-described phase structure of the two-component system in which the insulating layer 130 contains the base polymer (A) and the modified polymer (B) is formed.

By forming the above-described phase structure in the insulating layer 130, the polar groups in the modified polymer (B) can be uniformly dispersed in the insulating layer 130. This makes it possible to obtain uniform trapping effect of space charge in the insulating layer 130.

Furthermore, by forming the above-described phase structure in the insulating layer 130, the thermoplastic elastomer (C) can be uniformly dispersed in the insulating layer 130. Thus, the distribution of elasticity of the insulating layer 130 may be stably obtained in accordance with a difference in cooling rate in the thickness direction of the insulating layer 130.

In the present embodiment, the insulating layer 130 is non-crosslinked as described above, or even when the insulating layer 130 is crosslinked, the gel fraction (degree of crosslinking) is low. Specifically, the residue of the crosslinking agent in the insulating layer 130 is, for example, less than 300 ppm. In other words, the insulating layer 130 is slightly crosslinked such that the amount of the decomposition residue of the crosslinking agent is less than 300 ppm, for example. In this manner, the recycling property can be improved by making the insulating layer 130 non-crosslinked or by reducing the degree of crosslinking.

(Outer Semiconductive Layer)

The outer semiconductive layer 140 is provided to cover the outer periphery of the insulating layer 130. The outer semiconductive layer 140 is configured to be semiconductive and to suppress electric field concentration at a portion between the insulating layer 130 and the shielding layer 150. The outer semiconductive layer 140 is formed of, for example, the same material as the inner semiconductive layer 120.

(Shielding Layer)

The shielding layer 150 is provided to cover the outer periphery of the outer semiconductive layer 140. The shielding layer 150 is formed, for example, by winding a copper tape, or as a wire shield formed by winding a plurality of soft copper wires or the like. A tape made of a raw material such as a rubberized cloth may be wound inside or outside the shielding layer 150.

(Sheath)

The sheath 160 is provided to cover the outer periphery of the shielding layer 150. The sheath 160 is formed of, for example, polyvinyl chloride or polyethylene.

When the power cable 10 of the present embodiment is an underwater cable or a subaqueous cable, the power cable 10 may include, outside the shielding layer 150, a metallic water shielding layer such as a so-called alclad, or an iron wire armoring.

The power cable 10 of the present embodiment may include no water shielding layer outside the shielding layer 150, for example. That is, the power cable 10 of the present embodiment may be configured with a non-complete water shielding structure.

(Specific Dimensions and the like)

Specific dimensions of the power cable 10 are not particularly limited, but for example, the diameter of the conductor 110 is 5 mm or more and 60 mm or less, the thickness of the inner semiconductive layer 120 is 0.5 mm or more and 3 mm or less, the thickness of the insulating layer 130 is 3 mm or more and 35 mm or less, the thickness of the outer semiconductive layer 140 is 0.5 mm or more and 3 mm or less, the thickness of the shielding layer 150 is 0.1 mm or more and 5 mm or less, and the thickness of the sheath 160 is 1 mm or more. A DC voltage applied to the power cable 10 of the present embodiment is, for example, 20 kV or more.

(3) Cable Characteristics

In the present embodiment, the following cable characteristics are achieved in the insulating layer 130.

The term "outer-side sample" as used herein means a sheet collected from a position 0.3 mm away from the outer peripheral surface of the insulating layer 130 toward the conductor 110 in a radial direction of the conductor 110. The "inner-side sample" means a sheet collected from a position 0.3 mm away from the inner peripheral surface of the insulating layer 130 toward the outer peripheral surface of the insulating layer 130 in the radial direction of the conductor 110.

(Elasticity)

In the present embodiment, after the extrusion step of the insulating layer 130, a cooling step, which will be described later, is performed, so that the elasticity of the insulating layer 130 varies in the thickness direction of the insulating layer 130.

Specifically, a ratio of a storage modulus of an inner-side sample of the insulating layer 130 to a storage modulus of an outer-side sample of the insulating layer 130 (hereinafter also referred to as "elastic modulus ratio") is, for example, 1.1 or more and 2.5 or less.

The term "storage modulus" as used herein is measured by dynamic mechanical analysis (DMA) in accordance with JIS K7244-4:1999.

The dynamic mechanical analysis is performed under the following conditions.

Measurement Mode: tensile mode
Strain: 0.08%
Frequency: 10 Hz
Temperature range: 0°C or more and 200°C or less
Temperature rising rate: 10°C/min

The "storage modulus of the outer-side sample" and the "storage modulus of the inner-side sample" in the definition of the elastic modulus ratio described above are values measured at 25°C by the dynamic mechanical analysis. In the dynamic mechanical analysis, the thickness of each sample is 0.5 mm.

In the present embodiment, by setting the elastic modulus ratio to 1.1 or more, the inner side of the insulating layer 130 can be made harder while the outer side of the insulating layer 130 is made softer. As a result, in the present embodiment, both the flexibility of the insulating layer 130 and the strength of the insulating layer 130 can be achieved.

In the present embodiment, by setting the elastic modulus ratio to 2.5 or less, it is possible to suppress the formation of voids due to a stress difference in the insulating layer 130. This can suppress a decrease in dielectric breakdown strength (e.g., DC breakdown electric field strength) of the insulating layer 130.

The elastic modulus of the insulating layer 130 may be gradually decreased from the inner peripheral surface of the insulating layer 130 toward the outer peripheral surface of the insulating layer 130 in the radial direction of the conductor 110, for example. By suppressing a rapid change in the elasticity of the insulating layer 130 in this manner, it is possible to suppress the occurrence of cracks in the insulating layer 130 due to the difference in elastic modulus.

The storage modulus of the inner-side sample of the insulating layer 130 is, for example, 650 MPa or more and 900 MPa or less. By setting the storage modulus of the inner-side sample to 650 MPa or more, the rigidity of the power cable 10 can be achieved. By setting the storage modulus of the inner-side sample to 900 MPa or less, it is possible to suppress a decrease in the flexibility of the power cable 10.

The storage modulus of the outer-side sample of the insulating layer 130 is, for example, 280 MPa or more and 670 MPa or less. By setting the storage modulus of the outer-side sample to 280 MPa or more, it is possible to suppress excessive softening of the outer side of the insulating layer 130. Thus, it is possible to suppress the occurrence of cracks in the insulating layer 130 due to an impact during the installation of the power cable 10. By setting the storage modulus of the outer-side sample to 670 MPa or less, the flexibility of the power cable 10 can be achieved.

(Insulating Property)

In the present embodiment, the insulating layer 130 contains the modified polymer (B), and thus the trapping effect of space charge provided by the modified polymer (B) can be uniformly obtained in the insulating layer 130. As a result, the insulating property of the insulating layer 130 is uniform in the thickness direction of the insulating layer 130.

Specifically, a ratio of a volume resistivity of the inner-side sample of the insulating layer 130 to a volume resistivity of the outer-side sample of the insulating layer 130 (hereinafter also referred to as "volume resistivity ratio") is, for example, 1.0 or more and 1.5 or less.

The "volume resistivity of the outer-side sample" and the "volume resistivity of the inner-side sample" as used herein are measured under conditions of a temperature of 90°C and a DC electric field of 80 kV/mm.

In the present embodiment, by setting the volume resistivity ratio to 1.0 or more and 1.5 or less, it is possible to achieve sufficient insulating property intended for the insulating layer 130 of the power cable 10 as a whole.

The volume resistivity of the outer-side sample of the insulating layer 130 and the volume resistivity of the inner-side sample of the insulating layer 130, which are measured under the conditions of a temperature of 90°C and a DC electric field of 80 kV/mm, may be, for example, $7.0 \times 10^{14}\,\Omega\cdot$cm or more, or $3.6 \times 10^{15}\,\Omega\cdot$cm or more, or $5.0 \times 10^{15}\,\Omega\cdot$cm or more, or $7.0 \times 10^{15}\,\Omega\cdot$cm or more. In the measurement of the volume resistivity, the thickness of each sample is 0.2 mm.

The DC breakdown electric field strength of the outer-side sample of the insulating layer 130 and the DC breakdown electric field strength of the inner-side sample of the insulating layer 130, which are measured under a condition of a temperature of 90°C, are, for example, 160 kV/mm or more, or may be 200 kV/mm or more. In the measurement of the DC breakdown electric field strength, the thickness of each sample is 0.2 mm.

(4) Method of Manufacturing Power Cable

Next, a method of manufacturing a power cable of the present embodiment will be described. Hereinafter, a step is abbreviated as "S".

(S100: Resin Composition Preparation Step)

First, a resin composition of the present embodiment is prepared.

In the present embodiment, a resin component containing the base polymer (A), the modified polymer (B), and the thermoplastic elastomer (C), and other additives (antioxidant and the like) are mixed (kneaded) using a mixer to form a mixed material. Examples of the mixer include an open roll, a Banbury mixer, a pressure kneader, a single-screw mixer, and a multi-screw mixer.

After the mixed material is formed, the mixed material is granulated using an extruder. As a result, a pellet-like resin composition that is to constitute the insulating layer 130 is formed. The steps from the mixing step through the granulation step may be collectively performed using a twin-screw type extruder with a high kneading performance.

(S200: Conductor Preparation Step)

The conductor 110, which is formed by twisting together a plurality of conductor core wires, is prepared.

(S300: Cable Core Forming Step (Insulating Layer Forming Step))

After the resin composition preparation step S100 and the conductor preparation step S200 are completed, in a cable core forming step S300, the insulating layer 130 is formed to cover the outer periphery of the conductor 110 using the above-described resin composition.

The cable core forming step S300 of the present embodiment includes, for example, an extrusion step S320 and a cooling step S340.

(S320: Extrusion Step)

In the present embodiment, the inner semiconductive layer 120, the insulating layer 130, and the outer semiconductive layer 140 are formed simultaneously using, for example, a three-layer coextruder.

Specifically, for example, a composition for the inner semiconductive layer is charged into an extruder A, which is used to form the inner semiconductive layer 120, in the three-layer coextruder.

The pellet-like resin composition described above is charged into an extruder B used to form the insulating layer 130. In this case, a set temperature of the extruder B is set to a temperature that is higher than the melting point of the base polymer (A) by a temperature of 10°C or more and 80°C or less. The set temperature is adjusted as appropriate based on a line speed and an extrusion pressure.

A resin composition for the outer semiconductive layer, which includes the same material as the resin composition for the inner semiconductive layer charged into the extruder A, is charged into an extruder C used to form the outer semiconductive layer 140.

Next, the respective extrudates from the extruders A to C are guided to a common head, and the inner semiconductive layer 120, the insulating layer 130, and the outer semiconductive layer 140 are simultaneously extruded onto the outer periphery of the conductor 110, outwardly from the inner side. Thus, an extruded material to be a cable core is formed.

(S340: Cooling Step)

After the extrusion step S320 is completed, the extruded material is cooled.

In this case, in the present embodiment, the insulating layer 130 is cooled so that the ratio of the storage modulus of the inner-side sample of the insulating layer 130 to the storage modulus of the outer-side sample of the insulating layer 130 is 1.1 or more and 2.5 or less, and the ratio of the volume resistivity of the inner-side sample to the volume resistivity of the outer-side sample is 1.0 or more and 1.5 or less. That is, the cable core is cooled so that a temperature difference is intentionally generated between the inner side and the outer side of the insulating layer 130.

Specifically, the cable core formed by the extrusion step S320 is sequentially immersed in a water tank containing water cooled to a predetermined temperature by a chiller (hereinafter, also referred to as cooling water). Thus, the insulating layer 130 is rapidly cooled from a region close to the outer peripheral surface of the insulating layer 130.

In this case, at the position 0.3 mm away from the outer peripheral surface of the insulating layer 130 toward the conductor 110, that is, the position where the outer-side sample is collected, the cooling rate (temperature lowering rate) at a temperature of 110°C may be, for example, 30°C/min or more, 75°C/min or more, or 100°C/min or more. This can suppress excessive crystallization on the outer side of the insulating layer 130. As a result, the elasticity of the outer side of the insulating layer 130 can be reduced. The term "cooling rate at a temperature of 110°C" as used herein is determined as an absolute value of a slope of the temperature with respect to time at a temperature of 110°C.

In this case, at the position where the outer-side sample of the insulating layer 130 is collected, the cooling rate at a temperature of 110°C may be, for example, 310°C/min or less. This can suppress excessive variation in crystallinity in the thickness direction of the insulating layer 130. As a result, it is possible to suppress the occurrence of an excessive difference in elasticity in the thickness direction of the insulating layer 130.

In this case, the temperature of the cooling water in the water tank is set to, for example, -50°C or more and 50°C or less. Thus, the outer side of the insulating layer 130 can be cooled at the above-described cooling rate.

For at least a part of a period immediately after the extrusion step S320 of forming the insulating layer 130 by extrusion molding, the insulating layer 130 is cooled from a region near the outer peripheral surface of the insulating layer 130 while the conductor 110 is subjected to electromagnetic induction heating. The term "electromagnetic induction heating" as used herein means heating the conductor 110 by heat generation due to an eddy current loss generated in the conductor 110 by electromagnetic induction, and heat generated in the conductor 110 due to a hysteresis loss. The conductor 110 of the cable core immersed in the water tank can be heated in a noncontact manner by electromagnetic induction heating. Thus, the outer side of the insulating layer 130 is rapidly cooled, whereas cooling of the inside of the insulating layer 130 can be suppressed. That is, the inner side of the insulating layer 130 can be slowly cooled.

In this case, the conductor 110 is subjected to electromagnetic induction heating so that a temperature of the conductor 110 becomes 80°C or more and 110°C or less, for example. Thus, the inner side of the insulating layer 130 can be heated to a temperature close to a crystallization temperature of polypropylene as the base polymer (A), and the inner side of the insulating layer 130 can be slowly cooled. As a result, the elasticity on the inner side of the insulating layer 130 may be made higher.

A period of electromagnetic induction heating of the conductor 110 to the above temperature may be shorter than, for example, a period of water cooling the cable core.

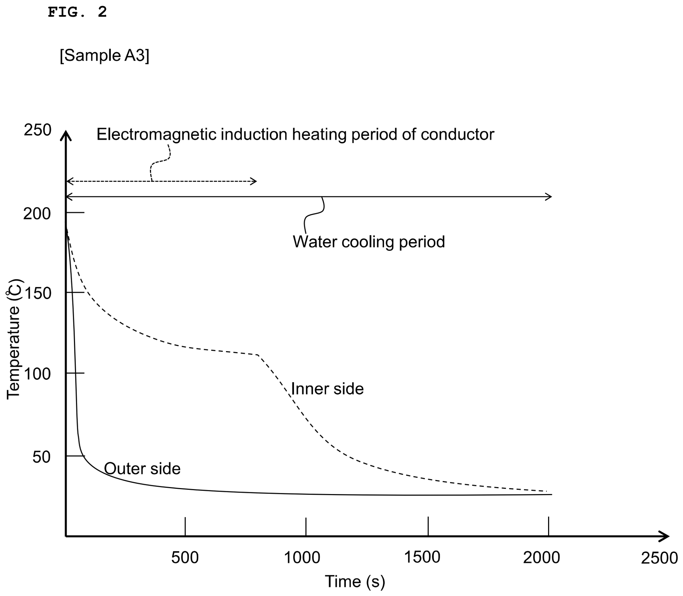

Through the cooling step S340 as described above, the insulating layer 130 is cooled, for example, as shown in FIG. 2.

As shown in FIG. 2, the temperature on the outer side of the insulating layer 130 is rapidly decreased from the temperature immediately after the extrusion step S320 to the temperature close to the temperature of the cooling water. The temperature on the inner side of the insulating layer 130 close to the conductor 110 is slowly decreased to the temperature of the conductor 110 heated by electromagnetic induction heating. After the electromagnetic induction heating of the conductor 110 is stopped, the temperature on the inner side of the insulating layer 130 gradually decreases to the temperature of the cooling water. In this manner, the outer side of the insulating layer 130 is rapidly cooled, whereas the inner side of the insulating layer 130 is slowly cooled.

As described above, by rapidly cooling the outer side of the insulating layer 130, crystallization of the base polymer (A) is suppressed on the outer side of the insulating layer 130, and the resin components can be solidified in a state close to amorphous. That is, the degree of crystallinity of the outer side of the insulating layer 130 can be lowered. By slowly cooling the inner side of the insulating layer 130, the base polymer (A) can be sufficiently crystallized on the inner side of the insulating layer 130. That is, the degree of crystallinity of the inner side of the insulating layer 130 can be increased. As a result, the above-described distribution of elasticity can be obtained in the thickness direction of the insulating layer 130.

Through the cable core forming step S300 described above, a cable core including the conductor 110, the inner semiconductive layer 120, the insulating layer 130, and the outer semiconductive layer 140 is formed.

(S400: Shielding Layer Forming Step)

After the cable core is formed, the shielding layer 150 is formed on the outer side of the outer semiconductive layer 140, for example, by winding a copper tape therearound.

(S500: Sheath Forming Step)

After the shielding layer 150 is formed, vinyl chloride is charged into an extruder and extruded from the extruder, thereby forming the sheath 160 on the outer periphery of the shielding layer 150.

As described above, the power cable 10 as a solid insulation power cable is manufactured.

(5) Summary of the Present Embodiment

According to the present embodiment, one or more of the following effects are achieved.

(a) In the present embodiment, in the cooling step S340 after the extrusion step S320 of the insulating layer 130, the outer side of the insulating layer 130 is rapidly cooled while the inner side of the insulating layer 130 is slowly cooled, whereby a predetermined amount of the base polymer (A) is crystallized on the inner side of the insulating layer 130, whereas the resin component is solidified in a state close to amorphous on the outer side of the insulating layer 130. This enables the elasticity of the insulating layer 130 to be made different in the thickness direction of the insulating layer 130.

The insulating layer 130 contains a predetermined amount of the modified polymer (B), so that the polar groups in the modified polymer (B) can be uniformly dispersed in the insulating layer 130. This makes it possible to uniformly obtain the trapping effect of the space charge provided by the modified polymer (B) in the insulating layer 130. That is, even when the crystallinity of the insulating layer 130 is distributed in the thickness direction of the insulating layer 130 as described above, it is possible to suppress the variation in insulating property due to the distribution of the crystallinity. As a result, the insulating property of the insulating layer 130 can be made uniform in the thickness direction of the insulating layer 130.

As described above, according to the present embodiment, the insulating property of the insulating layer 130 can be made uniform in the thickness direction of the insulating layer 130 while obtaining a desired distribution of elasticity in the thickness direction of the insulating layer 130. As a result, it is possible to obtain the power cable 10 in which the flexibility, strength, and insulating property of the insulating layer 130 are improved.

(b) In the present embodiment, the ratio of the storage modulus of the inner-side sample of the insulating layer 130 to the storage modulus of the outer-side sample of the insulating layer 130 can be 1.1 or more and 2.5 or less.

By setting the elastic modulus ratio to 1.1 or more, the inner side of the insulating layer 130 can be made harder while the outer side of the insulating layer 130 is made softer. By making the outer side of the insulating layer 130 softer, the flexibility of the power cable 10 can be improved. For example, it is possible to avoid excessive restriction on the reel diameter when the power cable 10 is wound around the reel. Furthermore, the rigidity of the power cable 10 can be achieved by making the inner side of the insulating layer 130 harder. As described above, it is possible to achieve both the flexibility of the insulating layer 130 and the strength of the insulating layer 130.

By setting the elastic modulus ratio to 2.5 or less, it is possible to suppress the formation of voids due to a stress difference in the insulating layer 130. This can suppress a decrease in dielectric breakdown strength (e.g., DC breakdown electric field strength) of the insulating layer 130.

(c) In the present embodiment, by uniformly dispersing the polar groups in the modified polymer (B), which trap space charge, in the insulating layer 130 at a predetermined content, the ratio of the volume resistivity of the inner-side sample of the insulating layer 130 to the volume resistivity of the outer-side sample of the insulating layer 130 can be set to 1.0 or more and 1.5 or less. For example, even when the degree of crystallinity becomes lower on the outer side of the insulating layer 130 by rapidly cooling the insulating layer 130 after the extrusion step S320, it is possible to suppress a decrease in insulating property on the outer side of the insulating layer 130. As a result, it is possible to achieve sufficient insulating property intended for the insulating layer 130 of the power cable 10 as a whole.

(d) In the present embodiment, even when the thickness of the insulating layer 130 is 3 mm or more, the insulating property of the insulating layer 130 can be made uniform in the thickness direction of the insulating layer 130 while obtaining a desired distribution of elasticity in the thickness direction of the insulating layer 130. Thus, even when the power cable 10 of the present embodiment is applied to a high-voltage application, it is possible to stably achieve both the flexibility of the insulating layer 130 and the insulating property of the insulating layer 130.

<Other Embodiments of the Present Disclosure>

Although the present embodiments of the present disclosure have been specifically described, the present disclosure is not limited to the above-described embodiments, and various changes can be made without departing from the gist of the present disclosure.

In the above-described embodiments, an embodiment in which the power cable 10 may have no water shielding layer has been described, but the present disclosure is not limited to such a case. The power cable 10 may have a simplified water shielding layer. Specifically, the simplified water shielding layer is formed of, for example, a metallic laminated tape. The metallic laminated tape includes, for example, a metal layer made of aluminum, copper, or the like, and an adhesive layer provided on one or both sides of the metal layer. The metallic laminated tape is wound longitudinally to surround the outer periphery of a cable core (an outer periphery of the outer semiconductive layer), for example. The water shielding layer may be provided outside the shielding layer, and may also serve as the shielding layer. This configuration can reduce the cost of the power cable 10.

In the above embodiment, an embodiment in which the power cable 10 is configured to be laid on ground, under water, or on the bottom of water has been described, but the present disclosure is not limited to such a case. For example, the power cable 10 may be configured as a so-called overhead wire (overhead insulation wire).

In the above embodiment, three layers are simultaneously extruded in the cable core forming step S300, but the layers may be extruded one layer at a time.

EXAMPLE

Next, examples according to the present disclosure will be described. These examples are merely illustrative of the present disclosure, and the present disclosure is not limited to these examples.

(1) Fabrication of Power Cable

As shown in Tables 1 and 2 described later, in each of samples A1 to A8 and B1 to B9, the resin composition was mixed using a Banbury mixer and granulated into a pellet shape using an extruder. Next, a conductor with a cross-sectional area of 2500 mm$^2$ was prepared by twisting together conductor core wires made of a dilute copper alloy with a diameter of 14 mm. After the conductor was prepared, a resin composition for an inner semiconductive layer containing ethylene-ethyl acrylate copolymer, the above-described resin composition, and a resin composition for an outer semiconductive layer formed of the same material as the resin composition for an inner semiconductive layer were respectively charged into the extruders A to C. The respective extrudates from the extruders A to C were guided to a common head, and the inner semiconductive layer, the insulating layer, and the outer semiconductive layer were simultaneously extruded onto the outer periphery of the conductor, outwardly from the inner side. In this case, the thicknesses of the inner semiconductive layer, the insulating layer, and the outer semiconductive layer were set to 0.5 mm, 9 mm, and 0.5 mm, respectively. After the extrusion step, the extruded material was cooled by a cooling method according to each sample. As a result, power cables for the samples A1 to A8 and B1 to B9 were manufactured.

The conditions for each sample are as shown in Tables 1 and 2 and described below.

<Sample A1 to A8>

(Base polymer (A))

Random polypropylene (r-PP):

Tacticity: isotactic
Density: 0.9 g/ml
Melting point: 150°C
Heat of fusion: 60 J/g
Storage modulus of base polymer (A) itself at 25°C measured by dynamic mechanical analysis: 1150 MPa

(Modified Polymer (B))

Maleic anhydride-modified polypropylene (MAH-PP):

Maleic anhydride modification amount: 5% by mass
Melting point: 160°C
Storage modulus of modified polymer (B) itself at 25°C measured by dynamic mechanical analysis: 1300 MPa

(Thermoplastic Elastomer (C))

Styrene-ethylene butylene-styrene block copolymer (SEBS):

Styrene unit content: 25% by mass

Melting point: none
Storage modulus of thermoplastic elastomer (C) itself at 25°C measured by dynamic mechanical analysis: 120 MPa

Ethylene-propylene rubber (EPR):

Ethylene unit content: 25% by mass
Melting point: none
Heat of fusion: none
Storage modulus of EPR itself at 25°C measured by dynamic mechanical analysis: 80 MPa

(Extrusion Step)

Extrusion temperature: 190°C

(Cooling Step)

In the cooling step for the sample A1 to the A8, the rapid cooling was performed as follows. The cable core formed in the extrusion step was sequentially immersed in a water tank containing cooling water cooled by a chiller. Thus, the insulating layer was rapidly cooled from a region close to the outer peripheral surface of the insulating layer.
In this case, in each of the samples A1 to A8, by controlling the temperature of the water tank within a range of -50°C or more and 50°C or less, the cooling rate at a temperature of 110°C on the outer side of the insulating layer was set to 40°C/min or more and 300°C/min or less.
For a period of 800 seconds immediately after the extrusion step of extrusion-molding the insulating layer, the insulating layer was cooled from a region of the insulating layer near the outer peripheral surface while the conductor was subjected to electromagnetic induction heating so that the temperature of the conductor became 110°C.

<Sample B1 to B4>

The samples B1 to B4 were fabricated in the same manner as the samples A1 to A4, respectively, except that the following slow cooling was performed in the cooling step.

(Cooling Step)

In the cooling step for the samples B1 to B4, first, the cable core formed by the extrusion step was air-cooled for 700 seconds. Thereafter, the cable core formed by the extrusion step was sequentially immersed in a water tank containing cooling water cooled by a chiller. Thus, the insulating layer was cooled from a region near the outer peripheral surface of the insulating layer. In this case, the temperature of the water tank was set to 25°C.

<Samples B5 to B8>

The samples B5 to B8 were fabricated in the same manner as the sample A3 except that the content of the modified polymer (B) and the content of the thermoplastic elastomer (C) were different from those of the sample A3.

<Sample B9 >

The sample B9 was fabricated in the same manner as the sample A3 except that the temperature of the water tank was controlled at -25°C in the cooling step to set the cooling rate of the insulating layer at a temperature of 110°C to 312°C/min.

(2) Evaluation

(Temperature Transition)

In each of the sample A3 and the sample B1, the temperature transition in the cooling step was measured as follows. Immediately after the extrusion step of each sample, a thermocouple was disposed (stuck) at each of the collecting position of the outer-side sample of the insulating layer and the collecting position of the inner-side sample of the insulating layer. Thereafter, in the cooling step, the temperature transition at each position was measured with the thermocouple. As a result of the measurement, the cooling rate at a temperature of 110°C was determined at the collecting position of the outer-side sample.

(Sample Collection after Cooling Step)

After the cooling step, the insulating layer of the power cable of each of the samples A1 to A8 and B1 to B9 was thinly sliced along a circumferential direction of the insulating layer. Thus, the outer-side sample of the insulating layer was collected from a position 0.3 mm away from the outer peripheral surface of the insulating layer toward the conductor. The inner-side sample of the insulating layer was collected from a position 0.3 mm away from the inner peripheral surface of the insulating layer toward the outer peripheral surface. The size of each sample in the dynamic mechanical analysis was 5 mm in length, 42 mm in width, and 0.5 mm in thickness. The size of each sample in the measurement of the volume resistivity and the DC breakdown electric field strength was 50 mm in length, 50 mm in width, and 0.2 mm in thickness.

(Storage modulus)

The storage modulus of the insulating layer in each sample was measured by dynamic mechanical analysis (DMA) under the following conditions in accordance with JIS K7244-4:1999.

Measurement apparatus: DVA-200 manufactured by IT Measurement Control Co., Ltd.
Measurement Mode: tensile mode
Strain: 0.08%
Frequency: 10 Hz
Temperature range: 0°C to 200°C
Temperature rising rate: 10°C/min

In this case, the storage modulus of the outer-side sample and the modulus of the inner-side sample were measured at 25°C by the DMA described above.

(Volume Resistivity)

The volume resistivity of the insulating layer in each sample was measured as follows. First, flat-plate electrodes with a diameter of 25 mm were each disposed on a first surface and a second surface opposite to the first surface of a sheet of an outer-side sample or an inner-side sample. After the electrodes were disposed, the sheet was immersed in silicone oil at a temperature of 90°C. In this state, a DC electric field of 80 kV/mm was applied to the sheet. In this manner, the volume resistivity was measured.

(DC Breakdown Electric Field Strength)

The DC breakdown electric field strength of the insulating layer in each sample was measured as follows. Specifically, as in the measurement of the volume resistivity, flat-plate electrodes with a diameter of 25 mm were each disposed on a first surface and a second surface opposite to the first surface of a sheet of the outer-side sample or the inner-side sample. After the electrodes were disposed, the sheet was immersed in silicone oil at a temperature of 90°C. In this state, an applied voltage was increased at a rate of 4 kV/min. Thereafter, the DC breakdown electric field strength of the sheet when dielectric breakdown occurred was measured. In both the outer-side sample and the inner-side sample, a case in which the DC breakdown electric field strength was 160 kV/mm or more was evaluated as A (good). In at least one of the outer-side sample or the inner-side sample, a case in which the DC breakdown electric field strength was less than 160 kV/mm was evaluated as B (poor).

(3) Results

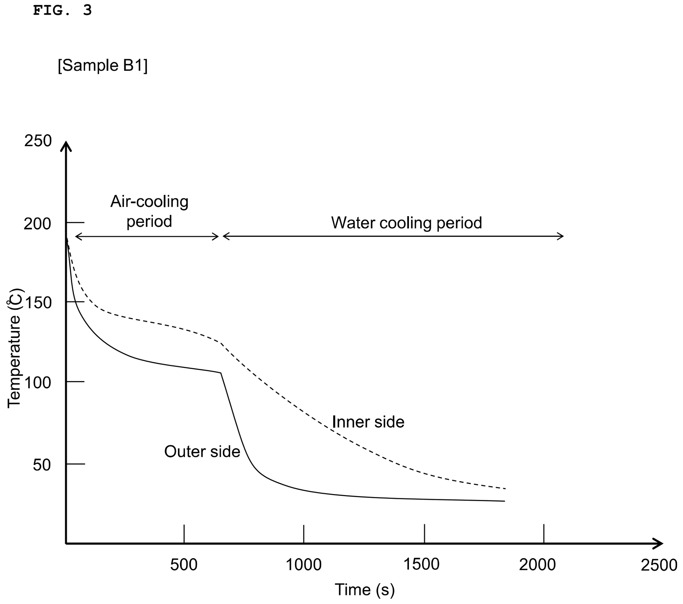

The results of evaluation of each sample will be described with reference to FIG. 2 and FIG. 3 and Table 1 and Table 2 below. In the "Cooling Method" of each table, the term "Slow Cooling" means that the same slow cooling as in the sample B1 was performed. The term "Rapid Cooling" means that the same rapid cooling as in the sample A3 was performed.

[Table 1]

| Sample | | A1 | A2 | A3 | A4 | A5 | A6 | A7 | A8 |
|---|---|---|---|---|---|---|---|---|---|
| Base polymer (A) | r-PP | 70 | 70 | 70 | 70 | 70 | 70 | 70 | 70 |
| Modified polymer (B) | MAH-PP | 1 | 2 | 5 | 10 | 5 | 5 | 5 | 5 |
| Thermoplastic elastomer (C) | SEBS | 29 | 28 | 25 | 20 | 25 | 25 | 25 | |
| | EPR | | | | | | | | 25 |
| Cooling method | | Rapid cooling | Rapid cooling | Rapid cooling | Rapid cooling | Rapid cooling | Rapid cooling | Rapid cooling | Rapid cooling |
| Outer cooling rate at 110°C (°C/min) | | 150 | 150 | 150 | 150 | 40 | 200 | 300 | 150 |
| Inner side | Storage modulus (MPa) | 726 | 723 | 725 | 729 | 734 | 720 | 714 | 731 |
| | Volume resistivity (Ω·cm) | $1.2\times10^{16}$ | $1.3\times10^{16}$ | $3.6\times10^{16}$ | $3.5\times10^{16}$ | $3.5\times10^{16}$ | $3.5\times10^{16}$ | $3.6\times10^{16}$ | $3.3\times10^{16}$ |
| Outer side | Storage modulus (MPa) | 557 | 554 | 560 | 578 | 667 | 360 | 285.6 | 571 |
| | Volume resistivity (Ω·cm) | $8.9\times10^{15}$ | $9.7\times10^{15}$ | $2.9\times10^{16}$ | $2.7\times10^{16}$ | $2.9\times10^{16}$ | $2.9\times10^{16}$ | $2.9\times10^{16}$ | $2.4\times10^{16}$ |
| Ratio of inner side to outer side | Storage modulus | 1.30 | 1.31 | 1.29 | 1.26 | 1.10 | 2.00 | 2.50 | 1.28 |
| | Volume resistivity | 1.35 | 1.34 | 1.24 | 1.30 | 1.23 | 1.21 | 1.24 | 1.38 |
| DC breakdown electric field strength | | A | A | A | A | A | A | A | A |

[Table 2]

| Sample | | B1 | B2 | B3 | B4 | B5 | B6 | B7 | B8 | B9 |
|---|---|---|---|---|---|---|---|---|---|---|
| Base polymer (A) | r-PP | 70 | 70 | 70 | 70 | 70 | 70 | 86 | 49 | 70 |
| Modified polymer (B) | MAH-PP | 1 | 2 | 5 | 10 | | 11 | 5 | 5 | 5 |
| Thermoplastic eastomer (C) | SEBS | 29 | 28 | 25 | 20 | 30 | 19 | 9 | 46 | 25 |
| | EPR | | | | | | | | | |
| Cooling method | | Slow cooling | Slow cooling | Slow cooling | Slow cooling | Rapid cooling | Rapid cooling | Rapid cooling | Rapid cooling | Rapid cooling |
| Outer cooling rate at 110°C (°C/min) | | 2.5 | 2.5 | 2.5 | 2.5 | 150 | 150 | 150 | 150 | 312 |
| Inner side | Storage modulus (MPa) | 740 | 735 | 738 | 745 | 693 | 730 | 1463 | 442 | 709 |
| | Volume resistivity ($\Omega \cdot$cm) | $1.1\times10^{16}$ | $1.2\times10^{16}$ | $3.5\times10^{16}$ | $3.4\times10^{16}$ | $1.1\times10^{15}$ | $3.6\times10^{15}$ | $3.6\times10^{16}$ | $3.1\times10^{14}$ | $3.7\times10^{16}$ |
| Outer side | Storage modulus (MPa) | 685 | 680 | 690 | 710 | 381 | 576 | 578 | 359 | 273 |
| | Volume resistivity ($\Omega \cdot$cm) | $9.1\times10^{15}$ | $9.9\times10^{15}$ | $3.0\times10^{16}$ | $2.8\times10^{16}$ | $4.7\times10^{14}$ | $1.3\times10^{15}$ | $2.7\times10^{16}$ | $1.6\times10^{14}$ | $3.0\times10^{16}$ |
| Ratio of inner side to outer side | Storage modulus | 1.08 | 1.08 | 1.07 | 1.05 | 1.82 | 1.27 | 2.53 | 1.23 | 2.60 |
| | Volume resistivity | 1.21 | 1.21 | 1.17 | 1.21 | 2.34 | 2.77 | 1.33 | 1.94 | 1.23 |
| DC breakdown electric field strength | | A | A | A | A | B | B | B | B | B |

<Comparison of Temperature Transition>

(Sample B1)

As shown in FIG. 3, in the period in which the air cooling after the extrusion step of the sample B1 was performed, the temperature decreased slowly at both the collecting position of the outer-side sample and the collecting position of the inner-side sample. At the collecting position of the outer-side sample, the cooling rate at a temperature of 110°C was 2.5°C/min.

Thereafter, the cable core was water-cooled, so that the cooling rate at the collecting position of the outer-side sample was increased. However, the cable core was water-cooled from a state in which the temperature had already dropped to around 100°C at both the collecting position of the outer-side sample and the collecting position of the inner-side sample. Thus, the temperature difference between these positions did not increase.

As described above, in the sample B1, the cooling rate of the base polymer on the outer side of the insulating layer was close to the cooling rate of the base polymer on the inner side of the insulating layer.

(Sample A3)

In contrast, as shown in FIG. 2, in the sample A3, the cable core was water-cooled immediately after the extrusion step. As a result, the temperature decreased rapidly at the collecting position of the outer-side sample. At the collecting position of the outer-side sample, the cooling rate at a temperature of 110°C was 150°C/min.

For a period of 800 seconds immediately after the extrusion step of the sample A3, the conductor was subjected to electromagnetic induction heating so that the temperature of the conductor became 110°C. As a result, the temperature decreased slowly at the collecting position of the inner-side sample. Thereafter, the electromagnetic induction heating was stopped, so that the cable core was water-cooled, resulting in the temperature at the collecting position of the inner-side sample also beginning to decrease to 100°C or less. However, the temperature at the collecting position of the inner-side sample decreased from a state in which the temperature thereof had already dropped to around 110°C. Thus, the temperature decreased slowly at the collecting position of the inner-side sample.

As described above, in the sample A3, the outer side of the insulating layer was rapidly cooled, whereas the inner side of the insulating layer was slowly cooled.

<Comparison of Properties >

(Sample B1 to B4)

In the samples B1 to B4, the contents of the base polymer (A), the modified polymer (B), and the thermoplastic elastomer (C) were the same as those in the samples A1 to A4, respectively, but the insulating layer was slowly cooled.

Thus, in the samples B1 to B4, the ratio of the volume resistivity of the inner-side sample to the volume resistivity of the outer-side sample was close to one. However, in the samples B1 to B4, the ratio of the storage modulus of the inner-side sample to the storage modulus of the outer-side sample was also close to one.

In the samples B1 to B4, the degree of crystallinity of the insulating layer was high and uniform in the thickness direction of the insulating layer due to the slow cooling of the insulating layer. Thus, it is considered that the elasticity of the insulating layer was also uniform in the thickness direction of the insulating layer in the samples B1 to B4.

(Sample B5)

In the sample B5, the outer side of the insulating layer was rapidly cooled as in the sample A3, but the modified polymer (B) was not added to the insulating layer.

Thus, in the sample B5, the ratio of the volume resistivity of the inner-side sample to the volume resistivity of the outer-side sample was larger than 1.5. In the outer-side sample of the sample B5, the DC breakdown electric field strength was less than 160 kV/mm.

In the sample B5, the distribution (variation) of the degree of crystallinity occurred in the thickness direction of the insulating layer due to the rapid cooling of the insulating layer. Furthermore, since the modified polymer (B) was not added to the insulating layer, the trapping effect of space charge provided by the modified polymer (B) was not obtained. Thus, it is considered that in the sample B5, the insulating property of the insulating layer deteriorated, and also varied in the thickness direction of the insulating layer.

(Sample B6)

In the sample B6, the outer side of the insulating layer was rapidly cooled as in the sample A3, but the content of the modified polymer (B) in the insulating layer was more than 10 parts by mass.

Thus, in the sample B6, the ratio of the volume resistivity of the inner-side sample to the volume resistivity of the outer-side sample was more than 1.5. In both the outer-side sample and the inner-side sample of the sample B6, the DC breakdown electric field strength was less than 160 kV/mm.

In the sample B6, the content of the modified polymer (B) in the insulating layer was more than 10 parts by mass, and thus the moldability of the insulating layer deteriorated. Thus, the insulating property of the insulating layer deteriorated due to the deteriorated moldability. As a result, it is considered that in the sample B6, the insulating property of the insulating layer deteriorated, and also varied in the thickness direction of the insulating layer.

(Sample B7)

In the sample B7, the outer side of the insulating layer was rapidly cooled as in the sample A3, but the content of the thermoplastic elastomer (C) in the insulating layer was less than 10 parts by mass.

Thus, in the sample B7, the storage modulus of the inner-side sample was particularly high. Due to this, the ratio of the storage modulus of the inner-side sample to the storage modulus of the outer-side sample was more than 2.5. In the outer-side sample of the sample B7, the DC breakdown electric field strength was less than 160 kV/mm.

In the sample B7, the content of the thermoplastic elastomer (C) in the insulating layer was less than 10 parts by mass, resulting in insufficient flexibility imparted by the thermoplastic elastomer (C). Thus, the elasticity of the insulating layer exhibited a significant variation in the thickness direction of the insulating layer. Furthermore, voids were formed due to a stress difference in the insulating layer. As a result, it is considered that the dielectric breakdown strength was reduced due to the formation of voids in the insulating layer in the sample B7.

(Sample B8)

In the sample B8, the outer side of the insulating layer was rapidly cooled as in the sample A3, but the content of the thermoplastic elastomer (C) in the insulating layer was more than 45 parts by mass.

Thus, in the sample B8, the volume resistivity was reduced as a whole, and the ratio of the volume resistivity of the inner-side sample to the volume resistivity of the outer-side sample was more than 1.5. In both the outer-side sample and the inner-side sample of the sample B8, the DC breakdown electric field strength was less than 160 kV/mm.

In the sample B8, the content of the amorphous thermoplastic elastomer (C) in the insulating layer was more than 45 parts by mass, and thus the insulating property that was inherently intended for polypropylene, which has a high melting point, as the base polymer (A), was deteriorated. As a result, it is considered that in the sample B8, the insulating property of the insulating layer deteriorated, and varied in the thickness direction of the insulating layer.

(Sample B9)

In the sample B9, at the collecting position of the outer-side sample of the insulating layer, the cooling rate at a temperature of 110°C was more than 310°C/min.

Thus, in the sample B9, the ratio of the storage modulus of the inner-side sample to the storage modulus of the outer-side sample was more than 2.5. In the outer-side sample of the sample B9, the DC breakdown electric field strength was less than 160 kV/mm.

In the sample B9, the cooling rate on the outer side of the insulating layer was excessively high, resulting in excessive variation of the degree of crystallinity in the thickness direction of the insulating layer. Thus, the elasticity of the insulating layer exhibited a significant variation in the thickness direction of the insulating layer. Furthermore, voids were formed due to a stress difference in the insulating layer. As a result, it is considered that the dielectric breakdown strength was decreased due to the formation of voids in the insulating layer in the sample B9.

(Sample A1 to A8)

In contrast, in the samples A1 to A8, the modified polymer (B) and the thermoplastic elastomer (C) were added to the insulating layer. In the samples A1 to A8, the content of the modified polymer (B) in the insulating layer was 1 part by mass or more and 10 parts by mass or less, and the content of the thermoplastic elastomer (C) in the resin composition was 10 parts by mass or more and 45 parts by mass or less. Furthermore, in the samples A1 to A8, the outer side of the insulating layer was rapidly cooled as described above. In this case, at the position where the outer-side sample of the insulating layer was collected, the cooling rate at a temperature of 110°C was 30°C/min to 310°C/min.

As a result, in each of the samples A1 to A8, the ratio of the storage modulus of the inner-side sample to the storage modulus of the outer-side sample was 1.1 or more and 2.5 or less. In each of the samples A1 to A8, the ratio of the volume resistivity of the inner-side sample to the volume resistivity of the outer-side sample was 1.0 or more and 1.5 or less. In each of the samples A1 to A8, the DC breakdown electric field strength was 160 kV/mm or more.

Based on the results of the samples A1 to A8 above, it was confirmed that it is possible to obtain a power cable in which the insulating property of the insulating layer is made uniform in the thickness direction of the insulating layer while achieving a desired distribution of elasticity in the thickness direction of the insulating layer.

<Supplementary Notes>

Hereinafter, supplementary descriptions of the aspects of the present disclosure will be given. The embodiments referred to by numbers in brackets [] to which the following clauses are dependent correspond to the embodiments described in the

<Embodiments of the Present Disclosure>.

[10]
The power cable according to the above [4],
wherein the styrene-based elastomer includes styrene units, and at least one type of propylene units or butene units.

[11]
The power cable according to the above [5],
wherein the olefin-based elastomer includes at least one type of propylene units or butene units.

[12]
The power cable according to any one of the above [2] to [7], [10], and [11],

wherein the volume resistivity of the outer-side sample and the volume resistivity of the inner-side sample are each $7.0 \times 10^{14}$ $\Omega \cdot$cm or more,
where the volume resistivity of the outer-side sample and the volume resistivity of the inner-side sample are measured at a temperature of 90°C and a DC electric field of 80 kV/mm.

[13]
The method of manufacturing a power cable according to the above [8],
wherein at a position where the outer-side sample of the insulating layer is collected, a cooling rate at a temperature of 110°C is 30°C/min or more.

[14]
The method of manufacturing a power cable according to the above [9],

wherein in the cooling the insulating layer,
the conductor is subjected to electromagnetic induction heating so that a temperature of the conductor becomes 80°C or more and 110°C or less.

REFERENCE SIGNS LIST

10 power cable
110 conductor
120 inner semiconductive layer
130 insulating layer
140 outer semiconductive layer
150 shielding layer
160 sheath

**Claims**

1. A resin composition constituting an insulating layer disposed to cover a conductor of a power cable and having an inner peripheral surface facing the conductor and an outer peripheral surface opposite to the inner peripheral surface, the resin composition comprising:

a base polymer including propylene units;
a modified polymer including propylene units and modified with at least one selected from unsaturated organic acids and derivatives thereof; and
a thermoplastic elastomer,
wherein the resin composition is configured such that
a ratio of a storage modulus of an inner-side sample of the insulating layer to a storage modulus of an outer-side sample of the insulating layer is 1.1 or more and 2.5 or less, and
a ratio of a volume resistivity of the inner-side sample to a volume resistivity of the outer-side sample is 1.0 or more and 1.5 or less,
the outer-side sample of the insulating layer being collected from a position 0.3 mm away from the outer peripheral surface toward the conductor,
the inner-side sample of the insulating layer being collected from a position 0.3 mm away from the inner peripheral surface toward the outer peripheral surface,
the storage modulus of the outer-side sample and the storage modulus of the inner-side sample being measured by dynamic mechanical analysis at 25°C,
the volume resistivity of the outer-side sample and the volume resistivity of the inner-side sample being measured at a temperature of 90°C and a DC electric field of 80 kV/mm.

2. A power cable comprising:

a conductor; and
an insulating layer disposed to cover an outer periphery of the conductor and having an inner peripheral surface facing the conductor and an outer peripheral surface opposite to the inner peripheral surface,
wherein the insulating layer contains
a base polymer including propylene units,
a modified polymer including propylene units and modified with at least one selected from unsaturated organic acids and derivatives thereof, and
a thermoplastic elastomer,
a ratio of a storage modulus of an inner-side sample of the insulating layer to a storage modulus of an outer-side sample of the insulating layer is 1.1 or more and 2.5 or less, and
a ratio of a volume resistivity of the inner-side sample to a volume resistivity of the outer-side sample is 1.0 or more and 1.5 or less,
the outer-side sample of the insulating layer being collected from a position 0.3 mm away from the outer peripheral surface toward the conductor,
the inner-side sample of the insulating layer being collected from a position 0.3 mm away from the inner peripheral surface toward the outer peripheral surface,
the storage modulus of the outer-side sample and the storage modulus of the inner-side sample being measured by dynamic mechanical analysis at 25°C,
the volume resistivity of the outer-side sample and the volume resistivity of the inner-side sample being measured at a temperature of 90°C and a DC electric field of 80 kV/mm.

3. The power cable according to claim 2,

wherein when a total content of the base polymer, the modified polymer, and the thermoplastic elastomer in the insulating layer is 100 parts by mass,
a content of the modified polymer in the insulating layer is 1 part by mass or more and 10 parts by mass or less, and
a content of the thermoplastic elastomer in the insulating layer is 10 parts by mass or more and 45 parts by mass or less.

4. The power cable according to claim 2 or 3,
wherein the thermoplastic elastomer includes a styrene-based elastomer.

5. The power cable according to any one of claims 2 to 4,
wherein the thermoplastic elastomer includes an olefin-based elastomer.

6. The power cable according to any one of claims 2 to 5,

wherein the storage modulus of the inner-side sample of the insulating layer is 650 MPa or more and 900 MPa or less, and
the storage modulus of the outer-side sample of the insulating layer is 280 MPa or more and 670 MPa or less.

7. The power cable according to any one of claims 2 to 6,
wherein the insulating layer has a thickness of 3 mm or more.

8. A method of manufacturing a power cable, the method comprising:

preparing a resin composition; and
forming an insulating layer with the resin composition to cover an outer periphery of a conductor, to form, in the insulating layer, an inner peripheral surface facing the conductor and an outer peripheral surface opposite to the inner peripheral surface,
wherein in the preparing a resin composition,
a composition containing
a base polymer including propylene units,
a modified polymer including propylene units and modified with at least one selected from unsaturated organic acids and derivatives thereof, and
a thermoplastic elastomer
is prepared as the resin composition, and
the forming an insulating layer includes
forming the insulating layer on the outer periphery of the conductor by extrusion molding, and
cooling the insulating layer so that a ratio of a storage modulus of an inner-side sample of the insulating layer to a storage modulus of an outer-side sample of the insulating layer is 1.1 or more and 2.5 or less, and a ratio of a volume resistivity of the inner-side sample to a volume resistivity of the outer-side sample is 1.0 or more and 1.5 or less,
the outer-side sample of the insulating layer being collected from a position 0.3 mm away from the outer peripheral surface toward the conductor,
the inner-side sample of the insulating layer being collected from a position 0.3 mm away from the inner peripheral surface toward the outer peripheral surface,
the storage modulus of the outer-side sample and the storage modulus of the inner-side sample being measured by dynamic mechanical analysis at 25°C,
the volume resistivity of the outer-side sample and the volume resistivity of the inner-side sample being measured at a temperature of 90°C and a DC electric field of 80 kV/mm.

9. The method of manufacturing a power cable according to claim 8,

wherein in the cooling the insulating layer,
for at least a part of a period immediately after the forming the insulating layer by extrusion molding, the insulating layer is cooled from a region of the insulating layer near the outer peripheral surface while the conductor is subjected to electromagnetic induction heating.

FIG. 1

160
150
140
130
120
110

10

FIG. 2

[Sample A3]

FIG. 3

[Sample B1]

EP 4 738 388 A1

## INTERNATIONAL SEARCH REPORT

International application No.

**PCT/JP2023/024391**

| A. | CLASSIFICATION OF SUBJECT MATTER |
|---|---|

*H01B 3/44*(2006.01)i; *H01B 9/00*(2006.01)i
FI:  H01B3/44 G; H01B9/00 A

According to International Patent Classification (IPC) or to both national classification and IPC

| B. | FIELDS SEARCHED |
|---|---|

Minimum documentation searched (classification system followed by classification symbols)

H01B3/44; H01B9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2023/017562 A1 (SUMITOMO ELECTRIC INDUSTRIES, LTD.) 16 February 2023 (2023-02-16) entire text, all drawings | 1-9 |
| A | JP 2020-122059 A (FUJIKURA LTD.) 13 August 2020 (2020-08-13) entire text, all drawings | 1-9 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 September 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

28

## INTERNATIONAL SEARCH REPORT
### Information on patent family members

International application No.

**PCT/JP2023/024391**

| Patent document cited in search report | | | Publication date (day/month/year) | Patent family member(s) | Publication date (day/month/year) |
|---|---|---|---|---|---|
| WO | 2023/017562 | A1 | 16 February 2023 | (Family: none) | |
| JP | 2020-122059 | A | 13 August 2020 | (Family: none) | |

Form PCT/ISA/210 (patent family annex) (January 2015)

**REFERENCES CITED IN THE DESCRIPTION**

**Patent documents cited in the description**

- JP 57069611 A